# FASCICULE DE BREVET EUROPEEN

(11) **EP 1 936 254 B1**
(45) Date de publication et mention de la délivrance du brevet: **02.09.2009**
(21) Numéro de dépôt: 07024490.0
(22) Date de dépôt: 18.12.2007
(51) Int. Cl.: F16L 41/08

(54) **Collecteur de fluides pour être utilisés dans des cellules d'électrolyse et son procédé de fabrication**
Flüssigkeitssammler zur Verwendung in Elektrolysezellen und sein Herstellungsverfahren
Collector of fluids to be used in electrolysis cells and method for manufacturing same

(30) Priorité: 22.12.2006 FR 0611294
(43) Date de publication de la demande: 25.06.2008
(73) Titulaire: Chem-Tech Engineering S.R.L., 24055 Cologno al Serio (IT)
(72) Inventeur: Balicco, Pier Giorgio, 24055 Cologno al Serio (IT)
(74) Mandataire: Duthoit, Michel Georges André

(56) Documents cités:
- DE-U1- 9 015 652
- US-A- 2 441 009
- US-A1- 2005 023 827
- US-A1- 2006 022 458

## Description

L'invention concerne un collecteur de fluides, tels que le chlore/anolyte et/ou hydrogène/soude dans une cellule à membrane de production de chlore, ainsi que son procédé de fabrication.

Actuellement, les collecteurs nécessaires, soit dans une cellule d'électrolyse à membranes, solt dans un dispositif similaire assemblant des cadres fonctionnels identiques en série, tels que par exemple les filtres presses, sont de manière habituelle réalisés en chaudronnerie, utilisant soit des métaux nobles, type titane ou alliages spéciaux, soit des matières plastiques, type polypropylène (PP) ou polychlorure de vinyle chloré (CPVC), assemblant par soudure les divers éléments nécessaires.

Pour des raisons économiques, les pièces les plus courantes sont réalisées en plastique.

Le procédé actuel, consiste, manuellement, à partir d'un tuyau en CPVC ou en PP, coupé à la longueur voulue, à souder, d'une part les brides d'extrémité, de même matière et obtenues par moulage séparé, et, d'autre part, à effectuer les divers piquages de diamètres variables, localisés en grand nombre, en général entre 10 à 15 par mètre linéaire, sur toute la longueur de la pièce, lesdites brides destinées à recevoir les tuyaux flexibles provenant des cadres.

Cet ensemble est ensuite contrôlé quant à l'étanchéité des soudures. Ensuite, la pièce est frettée par enrobage de fibres de verre imprégnées de résine polyester ou vinylester. Cette opération manuelle a comme but de conférer à la pièce des propriétés mécaniques que le CPVC ou le PP ne possède pas.

Bien que très répandus, de tels collecteurs présentent de nombreux inconvénients.

Tout d'abord, le procédé de fabrication est particulièrement long et délicat si l'on veut assurer l'obtention d'une pièce de qualité,

Par ailleurs, l'enrobage de la pièce avec des fibres de verre imprégnées de résine polyester ou vinylester est particulièrement délicat car la fibre imprégnée doit renforcer, outre le tuyau principal, chacun des piquages, ce qui rend le procédé de fabrication encore plus long et délicat.

En outre, la réparation d'un piquage endommagé lors d'une intervention est très difficile, voire impossible.

On connaît du document DE 90 15 652 une sellette de raccordement permettant de réaliser un piquage dans un tuyau. La sellette prend la forme d'un corps tubulaire dont la base est liée de manière étanche, via un joint, à une ouverture dans la paroi d'un tuyau.

La fixation de la sellette au tuyau est réalisée grâce à un système de boulons pressant la sellette contre la conduite. Cette fixation nécessite le perçage du tuyau pour y insérer des chevilles pour des vis, créant ainsi des éventuels points de fuite. La tête de vis, intérieure au tuyau, peut être corrodée par les fluides s'écoulant dans le tuyau.

On connaît du document US 2006/0022458 un connecteur de fluide qui trouve une application particulière comme raccord sur le carter de la transmission d'un véhicule. Il prend la forme d'un tube introduit dans un alésage correspondant du carter. Un joint permet de faire l'étanchéité entre l'alésage du carter et le tube.

Le tube présente sur son diamètre externe une lèvre, qui constitue non seulement une butée pour le joint, mais également un siège pour une plaque de fixation enfilée sur le tube. Cette plaque est pressée en direction du carter grâce à des vis, dont la tête prend appui sur la plaque, la partie filetée étant vissée dans des alésages taraudés du carter.

On connaît du document US 2,441,009 un raccord pour un réservoir. Ce raccord comprend un élément tubulaire dont la base, en deux parties, permet de prendre en sandwich une paroi souple du réservoir au niveau d'une ouverture de ladite paroi souple.

Le but de la présente invention est de proposer un collecteur de fluides, tels que le chlore et/ou hydrogène/soude, qui pallie les inconvénients précités, notamment en ce qui concerne son procédé de fabrication.

Un autre but de l'invention est de proposer un collecteur dont la fabrication peut être mécanisée et dont l'usinage est plus facile, même à grande vitesse.

Un autre but de la présente invention est de proposer un collecteur qui soit résistant aux chocs et à une température supérieure à 120°C.

Un autre but de la présente invention est de proposer un collecteur qui présente une résistance chimique en milieu corrosif et chaud, notamment une résistance au chlore, à l'acide chlorhydrique et à la soude.

D'autres buts et avantages de l'invention apparaîtront au cours de la description qui va suivre, qui ne sont donnés qu'à titre indicatif et qui n'ont pas pour but de la limiter.

L'invention concerne un collecteur de fluides, tels que le chlore et/ou hydrogène/soude, notamment pour être utilisés dans des cellules d'électrolyse à membranes. Selon l'invention, ledit collecteur comprend une structure principale monolithique, de forme tubulaire, et présente au moins un piquage d'entrée, destiné à recueillir les fluides à collecter, ainsi qu'au moins deux inserts et une bride pour fixer un tuyau de connexion.

L'invention concerne également un procédé de moulage conçu pour la fabrication d'un tel collecteur.

Selon la présente invention, ledit procédé de moulage comprend au moins les étapes suivantes :
- on introduit un tuyau en polymère dans une gaine cylindrique,
- on gonfle ledit tuyau jusqu'à l'obtention du diamètre souhaité,
- on met en place des inserts métalliques dans un moule,
- on introduit ledit tuyau gonflé entouré de ladite gaine cylindrique à l'intérieur dudit moule,
- on injecte un polymère dans ledit moule fermé,
- on ouvre ledit moule et on extrait ledit tuyau et ladite gaine cylindrique,
- on démoule ledit collecteur et on procède à son usinage.

L'invention sera mieux comprise à la lecture de la description suivante accompagnée des dessins en annexe parmi lesquels :
- la figure 1 illustre de manière schématique un collecteur tel qu'il est connu aujourd'hui dans l'état de la technique,
- la figure 2 représente de façon schématique un collecteur selon la présente invention,
- la figure 3 représente une vue du collecteur selon la présente invention,
- les figures 4, 5, 6, 7, 8 et 9 représentent les différentes phases de fabrication d'un collecteur tel que prévu dans la présente invention.

L'invention concerne tout d'abord un collecteur de fluides, tels que le chlore et/ou hydrogène/soude, notamment pour être utilisés dans des cellules d'électrolyse à membranes.

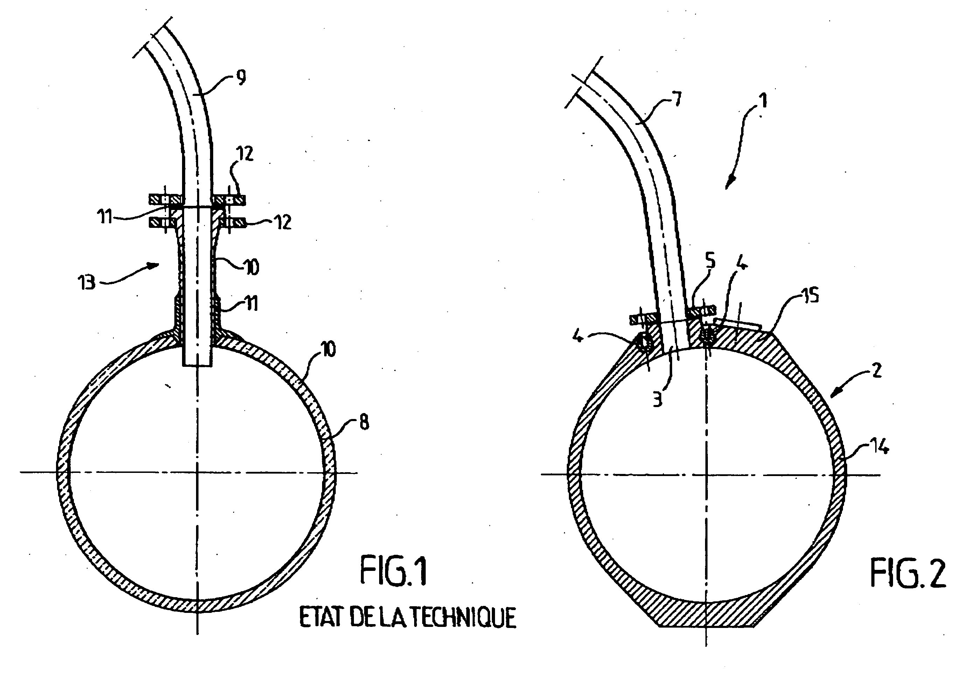

Comme illustré à la figure 2, ledit collecteur 1 comprend une structure principale 2 monolithique, de forme tubulaire, et présente au moins un piquage 3 d'entrée destiné à recueillir les fluides à collecter, ainsi qu'au moins deux inserts 4 et une bride 5 pour fixer un tuyau de connexion, notamment flexible 7.

Une comparaison entre les figures 1 et 2 permet de constater la différence de conception et la simplification du collecteur tel que décrit dans la présente invention par rapport à celui de l'état de la technique.

Comme montré à la figure 1, le collecteur tel qu'il est connu aujourd'hui dans l'état de la technique est composite et comprend un tuyau 8 en polypropylène (PP), un tuyau flexible 9 provenant des cadres (non représentés), un renforcement en fibres de verre ou résine 10, des soudures 11 et des brides 12.

Un des avantages du collecteur, selon la présente Invention, par rapport à l'état de la technique, tel que déjà mentionné précédemment réside dans, sa simplification de conception et de fabrication et notamment le fait que les piquages en excroissance 13 destinés à recueillir le fluide à collecter. présent dans l'état de la technique sont supprimés.

Selon la présente invention, la paroi 14 de la structure principale monolithique 2 dudit collecteur 1 présente localement une surépaisseur 15.

Des inserts 4, en inox par exemple, sont surmoulés dans ladite surépaisseur 15 de la paroi 14 de la structure principale 2. Ces inserts 4 sont de préférence non cylindriques mais à section hexagonale, afin d'augmenter la résistance de serrage entre lesdits inserts 4 et la bride 5.

Tels que montrés à la figure 2, les inserts 4 sont affleurants à la surface extérieure du collecteur 1 et noyés dans ladite surépaisseur 15 de la paroi 14.

La paroi 14 est usinée localement sur sa face extérieure pour permettre d'assurer l'étanchéité de la fixation par bride 5 du tuyau de connexion 7. La connexion audit tuyau 7 est réalisée par perçage de la paroi 14, l'endroit étant prémarqué par moulage.

Un des avantages d'un collecteur, selon la présente invention grâce à la structure monolithique de la structure, est de présenter la bride 5 solidaire du corps du collecteur 1, et non plus à l'extrémité d'une excroissance 13 potentiellement fragile, tel que montré à la figure 1.

Selon un mode particulier de la présente invention, ledit collecteur 1 est constitué d'un polymère pur, non armé et non chargé.

A titre d'exemple non limitatif, ledit polymère est le polydicyclopentadiène (PDCPD).

Un des avantages du polymère polydicyclopentadiène est le fait de présenter des propriétés isotropes dues à l'absence de fibres et de charges minérales.

En outre, ce type de polymère est résistant aux chocs et présente une tenue thermique supérieure à 120 °C, et une résistance chimique exceptionnelle en présence d'acide chlorhydrique, de chlore et de soude.

A titre d'exemple, non limitatif, ledit collecteur 1, selon la présente invention, présente un diamètre entre 100 et 600 mm.

Encore selon la présente invention, à titre d'exemple non limitatif, ledit collecteur 1 peut présenter une longueur jusqu'à 8 mètres.

Des longueurs unitaires supérieures sont techniquement possibles mais peuvent poser des problèmes économiques, liés à la taille et au coût du moule 18 si la série à produire est faible.

La présente invention concerne en outre un procédé de moulage conçu pour la fabrication d'un collecteur 1 tel que décrit dans la présente invention.

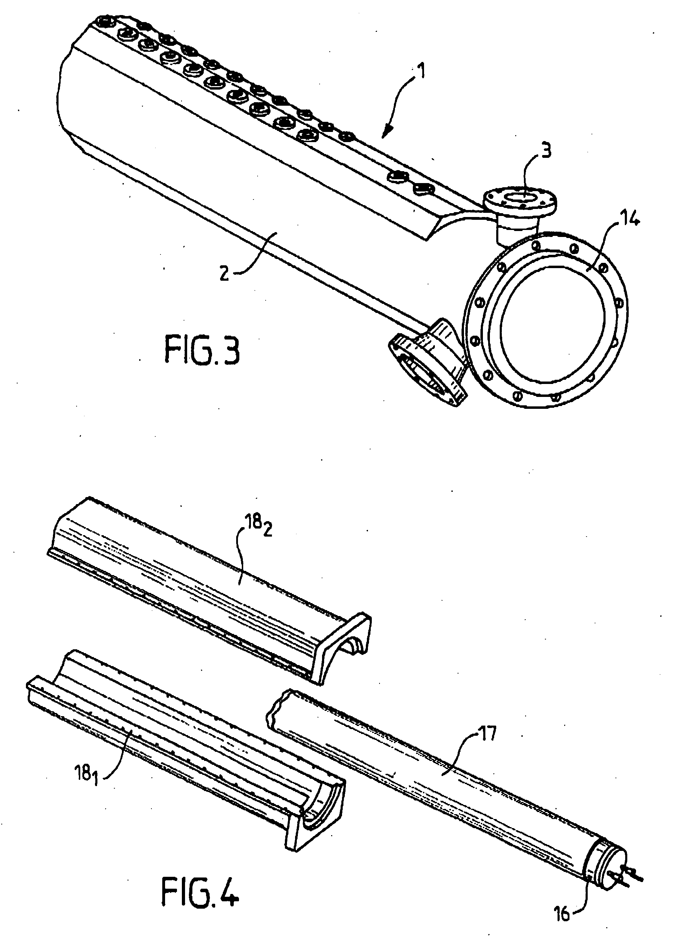

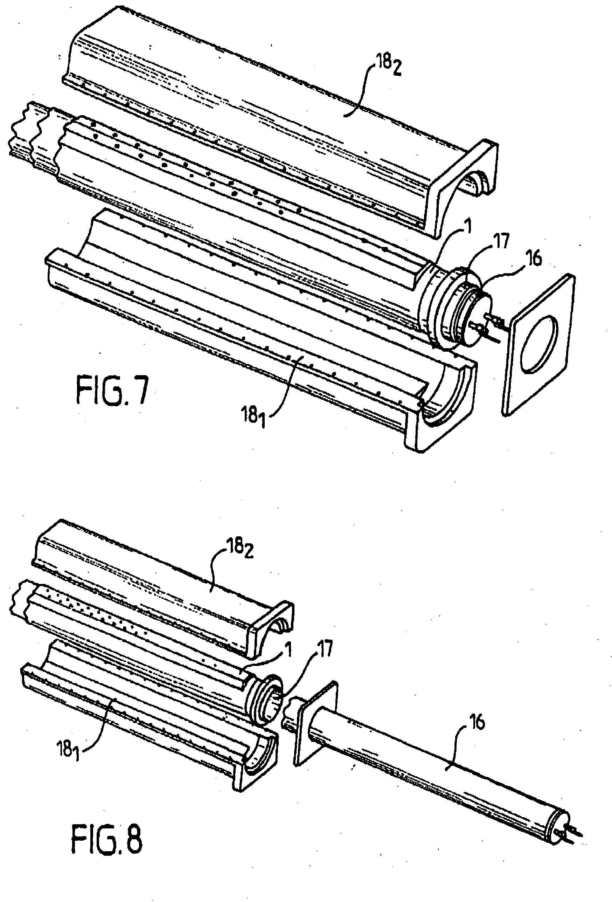

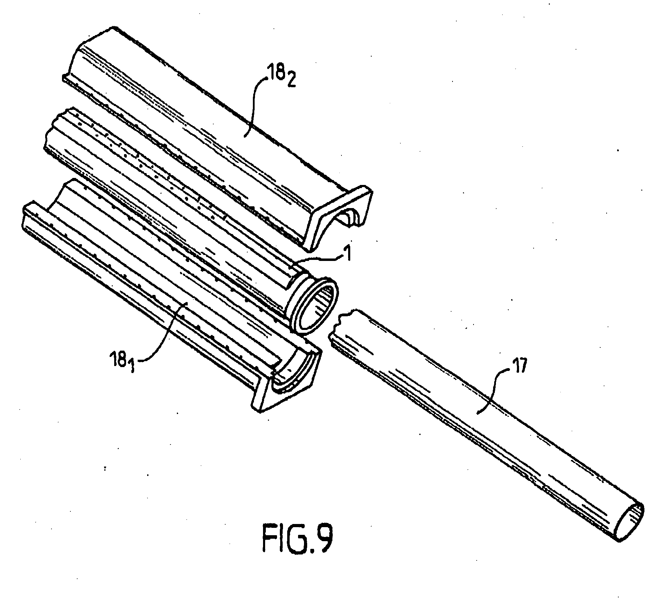

Selon l'invention, et tel que montré aux figures 4 à 9, ce procédé comprend au moins les étapes suivantes ;
- on introduit un tuyau 16 en polymère dans une gaine cylindrique 17,
- on gonfle ledit tuyau 16 jusqu'à l'obtention du diamètre souhaité,
- on met en place des inserts 4 métalliques dans un moule 18,
- on introduit ledit tuyau 16 gonflé entouré de ladite gaine cylindrique 17 à l'intérieur dudit moule 18 fermé,
- on injecte un polymère dans ledit moule 18,
- on ouvre ledit moule 18 et on extrait ledit tuyau 16 et ladite gaine cylindrique 17,
- on démoule ledit Collecteur 1 et on procède à son usinage.

Le tuyau 16 en polymère est, notamment, de type néoprène renforcé textile, de longueur supérieure à celle du collecteur 1 à réaliser et muni de dispositifs de fermeture, dont un équipé d'une valve (non représenté).

La gaine cylindrique 17 est un cylindre en élastomère silicone dont le rôle est de protéger le néoprène du contact avec le dicyclopentadiène (qui est un solvant à l'état liquide avant polymérisation) et de favoriser l'extraction du mandrin, car le silicone est anti-adhéslf.

En outre, le moule 18 dans lequel les inserts 4 métalliques sont mis en place est adapté et contrôlé en température.

Par ailleurs, une fois que ledit tuyau 16 gonflé et entouré de ladite gaine cylindrique 17 est introduit à l'intérieur dudit moule 18, ce dernier après fermeture maintiendra en place la partie centrale du tuyau 16 dans la cavité interne du moule 18 par pincement des extrémités qui débordent de part et d'autre.

Finalement, l'extraction du tuyau 16 et de ladite gaine cylindrique, non adhérente et protectrice, est effectuée après dégonflage dudit tuyau 16.

Selon un mode particulier de la présente invention, ledit tuyau 16 est gonflé à l'aide d'eau sous une pression de 2 à 4 bars. Ledit tuyau 16 est alors gonflé jusqu'à l'obtention du diamètre souhaité.

Les inserts métalliques 4 mis en place dans le moule 18, sont, à titre d'exemple non limitatif, maintenus en place par vissage de l'extérieur.

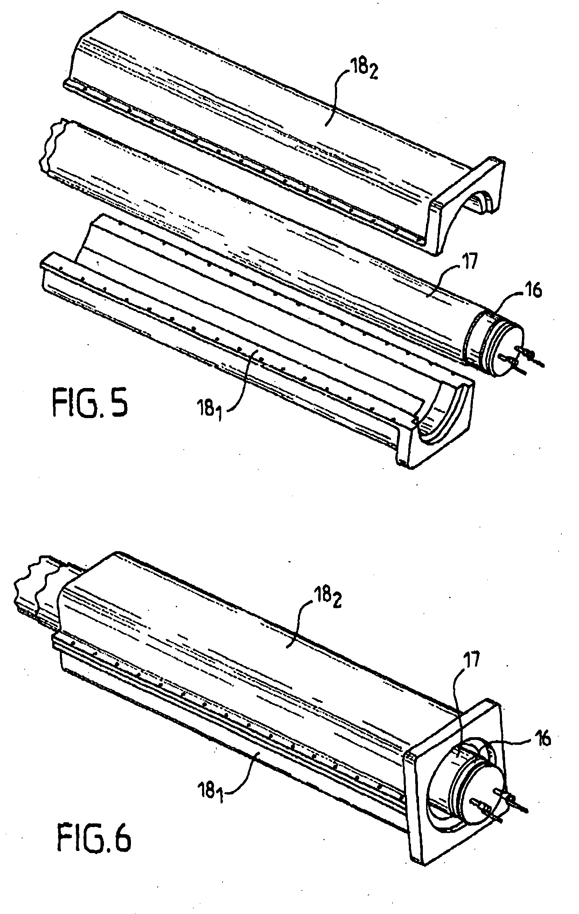

Ensuite, et tel que montré aux figures 5 et 6, on introduit ledit tuyau 16 gonflé entouré de ladite gaine cylindrique 17 à l'intérieur dudit moule 18.

L'ensemble constitué du tuyau 16 gonflé entouré de ladite gaine 17 cylindrique est appelé également le mandrin. Le mandrin est maintenu en position après fermeture du moule 18 par pincement, les deux extrémités sortant du moule 18, tel que déjà mentionné précédemment.

Dans le cas d'un mandrin où le néoprène constituant le tuyau 16 est remplacé par un élastomère silicone, la gaine 17 sera inutile.

En outre, on peut avoir un mandrin équipé d'un renfort métallique en cas de grande longueur.

Selon la présente invention, ledit collecteur 1, tel que décrit dans la présente invention, est moulé par injection dudit polymère liquide pur, non armé et non chargé, dans ledit moule 18 fermé.

La structure monolithique dudit collecteur est ainsi obtenue par injection réaction dudit polymère dans ledit moule 18.

Selon un mode particulier de la présente invention, ledit polymère injecté dans ledit moule 18 est le dicyclopentadiène Le polydicyclopentadiène (PDCPD), est obtenu par réaction de métathèse à partir du dicyclopentadiène.

Encore, selon la présente invention, ledit moule 18 est en aluminium, réalisé en deux parties 18₁, 18₂ et muni d'un dispositif de contrôle de température (non représenté).

Le procédé selon la présente invention, permet la réalisation d'un collecteur 1 de même longueur mais offrant un nombre de piquages 3 variable. En effet, seules les connexions que l'on aura percées seront fonctionnelles. Ceci permet d'utiliser un tel collecteur 1 sur des installations ayant des cadres d'épaisseurs variables sans avoir à changer de moule.

Le contrôle thermique, fondamental pour assurer une homogénéité du polymère quand les épaisseurs varient fortement, est ici favorisé par l'emploi d'eau dans le mandrin. On peut ainsi orienter le démarrage de la réaction et la faire progresser de l'extérieur vers l'intérieur, évitant ainsi toute porosité dans la masse.

De même, l'emploi d'eau évite des variations éventuelles de diamètre intérieur par la pression d'injection du polymère.

Naturellement, d'autres modes de mise en oeuvre, à la portée de l'homme de l'art, auraient pu être envisagés sans pour autant sortir du cadre de l'invention.

## Revendications

1. Collecteur de fluides, tels que le chlore et/ou hydrogène/soude, notamment pour être utilisés dans des cellules d'électrolyse à membranes, **caractérisé en ce que** ledit collecteur comprend une structure principale (2) monolithique de forme tubulaire, et présente au moins un piquage (3) d'entrée destiné à recueillir les fluides à collecter, et au moins deux inserts (4) et une bride (5) pour fixer un tuyau de connexion (7).

2. Collecteur (1) selon la revendication 1, **caractérisé en ce que** la paroi (14) de la structure principale (2) présente localement une surépaisseur (15).

3. Collecteur selon les revendications 1 et 2, **caractérisé en ce que** les inserts (4) sont surmoulés dans ladite surépaisseur (15) de la paroi (14) de la structure principale (2).

4. Collecteur (1) selon la revendication 1, **caractérisé en ce qu'**il est constitué d'un polymère pur, non armé et non chargé.

5. Collecteur (1) selon la revendication 4, **caractérisé en ce que** le polymère est le polydicyclopentadiène.

6. Collecteur (1) selon la revendication 1, **caractérisé en ce qu'**il présente un diamètre entre 100 mm et 600 mm.

7. Collecteur (1) selon la revendication 1, **caractérisé en ce qu'**il présente une longueur jusqu'à 8 mètres.

8. Procédé de moulage conçu pour la fabrication d'un collecteur, selon l'une quelconque des revendications précédentes, **caractérisé en ce qu'**il comprend au moins les étapes suivantes :
- on introduit un tuyau (16) en polymère dans une gaine cylindrique (17),
- on gonfle ledit tuyau (16) jusqu'à l'obtention du diamètre souhaité,
- on met en place des Inserts (4) métalliques dans un moule (18),
- on introduit ledit tuyau (16) gonflé entouré de ladite gaine cylindrique (17) à l'intérieur dudit moule (18) fermé,
- on injecte un polymère dans ledit moule (18),
- on ouvre ledit moule (18) et on extrait ledit tuyau (16) et ladite gaine cylindrique (17),
- on démoule ledit collecteur (1) et on procède à son usinage.

9. Procédé selon la revendication 8, **caractérisé en ce que** ledit tuyau (16) est gonflé à l'aide d'eau sous une pression de 2 à 4 bars.

10. Procédé selon la revendication 8, **caractérisé en ce que** ledit tuyau (16) est en néoprène.

11. Procédé selon la revendication 8, **caractérisé en ce que** la partie centrale dudit tuyau (16) est maintenue en place dans la cavité interne du moule (18) par pincement des extrémités qui débordent de part et d'autre.

12. Procédé selon la revendication 8, **caractérisé en ce que** ledit collecteur (1) est moulé par injection dudit polymère liquide pur, non armé et non chargé, dans ledit moule fermé (18).

13. Procédé selon la revendication 12, **caractérisé en ce que** ledit collecteur (1) est obtenu par injection réaction dudit polymère dans ledit moule (18).

14. Procédé selon la revendication 12, **caractérisé en ce que** ledit polymère injecté dans ledit moule (18) est le dicyclopentadiène.

15. Procédé selon la revendication 12, **caractérisé en ce que** ledit dicyclopentadiène origine le polydicyclopentadiène par réaction de métathèse.

16. Procédé selon la revendication 8, **caractérisé en ce que** ledit moule (18) est en aluminium, réalisé en deux parties (18₁, 18₂) et muni d'un dispositif de contrôle de température.

## Claims

1. A collector of fluids, such as in particular chlorine and/or hydrogen/soda, in particular for use in membrane electrolysis cells, **characterised in that** said collector includes a tubular monolithic main structure (2) and exhibits at least one inlet tapping (3) intended for recovering the fluidic to be collected, and at least two inserts (4) and a flange (5) for fastening a connection pipe (7).

2. A collector (1) according to claim 1, **characterised in that** the partition (14) of the main structure (2) locally exhibits a reinforcement (15).

3. A collector according to claims 1 and 2, **characterised in that** the inserts (4) are compound-filled in said reinforcement (15) of the partition (14) of the main structure (2),

4. A collector (1) according to claim 1, **characterised in that** it is formed of a pure, non-armoured and non-charged polymer.

5. A collector (1) according to claim 4, **characterised in that** the polymer is polydicyclopentadiene.

6. A collector (1) according to claim 1, **characterised in that** it exhibits a diameter ranging between 100 and 600 mm.

7. A collector (1) according to claim 1, **characterised in that** it exhibits a length up to 8 metres.

8. A moulding method designed for manufacturing a collector, according to any of the previous claims, **characterised in that** it includes at least the following steps:
- a polymer pipe (16) is inserted into a cylindrical sheath (17),
- said pipe (16) is inflated until the required diameter is obtained,
- metallic inserts (4) are placed inside a mould (18),
- said inflated pipe (16) surrounded by said cylindrical sheath (17) is inserted inside said closed mould (18),
- a polymer is injected into said mould (18),
- said mould (18) is opened and said pipe (16) and said cylindrical sheath (17) are removed,
- said collector (1) is extracted from the mould and then machined.

9. A method according to claim 8, **characterised in that** said pipe (16) is inflated water at 2 to 4 bar pressure.

10. A method according to claim 8, **characterised in that** said pipe (16) is made of neoprene.

11. A method according to claim 8, **characterised in that** the central portion of said pipe (16) is held in place in the internal cavity of the mould (18) by pinching the end protruding from both sides.

12. A method according to claim 8, **characterised in that** said collector (1) is moulded by injecting said pure liquid, non-armoured and non-charged polymer, into said closed mould (18).

13. A method according to claim 12, **characterised in that** said collector (1) is obtained by injection-reaction of said polymer in said mould (18).

14. A method according to claim 12, **characterised in that** said polymer injected into said mould (18) is dicyclopentadiene.

15. A method according to claim 12, **characterised in that** said dicyclopentadiene produces polydicyclopentadiene by metathesis reaction.

16. A method according to claim 8, **characterised in that** said mould (18) is made of aluminium, in two sections (181, 182) and fitted with a temperature control device.

## Patentansprüche

1. Auffangbehälter für Fluida, wie Chlor und/oder Wasserstoff/Soda, nämlich für Verwendung in Elektrolysezellen mit Membranen, **dadurch gekennzeichnet, dass** der besagte Auffangbehälter eine monolithische, rohrförmige Hauptstruktur (2) umfasst, und wenigstens eine Einlaßbohrung (3), die dazu bestimmt ist, um die aufzufangenden Fluida aufzufangen, und wenigstens zwei Einsätze (4) und einen Flansch (5) für die Befestigung eines Verbindungsrohres (7) umfaßt.

2. Auffangbehälter (1) nach Anspruch 1, **dadurch gekennzeichnet, dass** die Wand (14) der Hauptstruktur (2) örtlich eine Überdicke (15) aufweist.

3. Auffangbehälter nach Ansprüchen 1 und 2, **dadurch gekennzeichnet, dass** die Einsätze (4) in der besagten Überdicke (15) der Wand (14) der Hauptstruktur (2) angeformt sind.

4. Auffangbehälter (1) nach Anspruch 1, **dadurch gekennzeichnet, dass** er aus einem reinen, nicht verstärkten und ungeänderten Polymer hergestellt ist.

5. Auffangbehälter (1) nach Anspruch 4, **dadurch gekennzeichnet, dass** das Polymer Polydicyclopentadien ist.

6. Auffangbehälter (1) nach Anspruch 1, **dadurch gekennzeichnet, dass** er einen Durchmesser zwischen 100 mm und 600 mm aufweist.

7. Auffangbehälter (1) nach Anspruch 1, **dadurch gekennzeichnet, dass** er eine Länge von bis zu 8 Meter aufweist.

8. Formverfahren vorgesehen für die Herstellung eines Auffangbehälters nach irgendeinem der vorgehenden Ansprüche, **dadurch gekennzeichnet, dass** er wenigstens die nachfolgenden Stufen umfaßt:
- ein Rohr (16) aus Polymer wird in eine zylindrische Hülle (17) hineingeführt,
- das besagte Rohr (16) wird ausgebaucht, bis der gewünschte Durchmesser erreicht ist,
- metallische Einsätze (4) werden in eine Gußform (18) gesetzt,
- das besagte ausgebauchte, von der besagten zylindrischen Hülle (17) umgebene Rohr (16) wird in das Innere der besagten geschlossenen Gußform (18) hineingeführt,
- es wird ein Polymer in die besagte Gußform (18) eingespritzt,
- die besagte Gußform (18) wird geöffnet und das besagtre Rohr (16) und die besagte zylindrische Hülle (17) werden herausgezogen,
- der besagte Auffangbehälter (1) wird aus der Gußform herausgenommen und seine Bearbeitung wird vorgenommen,

9. Verfahren nach Anspruch 8, **dadurch gekennzeichnet, dass** das besagte Rohr (16) mit unter einem Druck von 2 bis 4 Bar stehendem Wasser ausgebaucht wird.

10. Verfahren nach Anspruch 8, **dadurch gekennzeichnet, dass** das besagte Rohr (16) aus Neopren hergestellt ist.

11. Verfahren nach Anspruch 8, **dadurch gekennzeichnet, dass** der Mittelteil des besagten Rohrs (16) durch Klemmung der beidseits ausragenden Enden in den inneren Hohlraum der Gußform {18) gehalten wird.

12. Verfahren nach Anspruch 8, **dadurch gekennzeichnet, dass** der besagte Auffangbehälter (1) durch Spritzgießen des besagten reinen, nicht verstärkten und ungeänderten flüssigen Polymers in der besagten Gußform (18) hergestellt wird.

13. Verfahren nach Anspruch 12, **dadurch gekennzeichnet, dass** der besagte Auffangbehälter (1) durch Reaktionseinspritzen des besagten Polymers in der besagten Gußform (18) erhalten wird.

14. Verfahren nach Anspruch 12, **dadurch gekennzeichnet, dass** das besagte in der besagten Gußform (16) eingespritzte Polymer Dicyclopentadien ist.

15. Verfahren nach Anspruch 12, **dadurch gekennzeichnet, dass** das besagte Dicyclopentadien durch Metathesereaktion zum Polydicyclopentadien führt.

16. Verfahren nach Anspruch 8, **dadurch gekennzeichnet, dass** die besagte Gußform (18) aus Aluminium, aus zwei Teilen (181, 182) und mit einer Temperaturkontrollvorrichtung versehen ist.
